(19) Europäisches Patentamt
European Patent Office
Office européen des brevets

(11) **EP 2 072 964 A2**

(12) **EUROPÄISCHE PATENTANMELDUNG**

(43) Veröffentlichungstag:
**24.06.2009 Patentblatt 2009/26**

(51) Int Cl.:
***G01D 5/244*** *(2006.01)*

(21) Anmeldenummer: **08021863.9**

(22) Anmeldetag: **17.12.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **21.12.2007 DE 102007062335**

(71) Anmelder: **Robert Bosch GmbH**
**70469 Stuttgart (DE)**

(72) Erfinder:
• **Korajda, Bartosz**
  **97816 Lohe am Main (DE)**
• **Scheb, Oliver**
  **97816 Lohr am Main. (DE)**

(74) Vertreter: **Thürer, Andreas**
**Bosch Rexroth AG**
**Intellectual Property**
**Zum Eisengiesser 1**
**97816 Lohr am Main (DE)**

(54) **Verfahren und Vorrichtung zum Ermitteln von Messwerten aus einem zeitabhänigen Verlauf**

(57)     Ein Verfahren und eine Vorrichtung zum Ermitteln von Messwerten aus einem Zeitabhängigen Verlauf vorgegebener Werte. Dabei wird in einem Schritt eine Messung mit Hilfe einer Messeinrichtung durchgeführt und ein dieser Messung zugeordneter Zeitpunkt ($T_M$) ermittelt. Weiterhin wird der Messwert ($y_E$) ermittelt, wobei zu der Ermittlung des Messwerts ($y_E$) wenigstens zwei Wertepaare ($t_1$, $y_1$; $t_2$, $y_2$) des zeitabhängigen Verlaufs verwendet werden und diese Wertepaare ($t_1$, $y_1$; $t_2$, $y_2$) sich jeweils aus einem Zeitpunkt ($t_1$; $t_2$) und einem diesem Zeitpunkt ($t_1$; $t_2$) zugeordneten Wert ($y_1$; $y_2$) zusammensetzen. Erfindungsgemäß wird der Messwert ($y_E$) unter Zugrundelegung eines korrigierten Zeitpunkts bestimmt und der korrigierte Zeitpunkt ($T_K$) wird ermittelt, in dem der der Messung zugeordnete Zeitpunkt ($T_M$) durch einen Korrekturterm korrigiert wird, wobei der Korrekturterm eine Totzeit ($T_T$) der Messeinrichtung berücksichtigt.

Fig. 2

Printed by Jouve, 75001 PARIS (FR)

EP 2 072 964 A2

**Beschreibung**

Die vorliegende Erfindung bezieht sich auf ein Verfahren und eine Vorrichtung zum Ermitteln von Messwerten aus einem zeitabhängigen Verlauf. Die Erfindung findet insbesondere im Bereich von Verpackungsmaschinen, Druckmaschinen, Textilmaschinen und Automatisierungsanlagen Anwendung. Darüber hinaus ist es auch möglich, das erfindungsgemäße Verfahren und die erfindungsgemäße Vorrichtung bei elektrisch, hydraulisch oder pneumatisch gesteuerten Anlagen einzusetzen.

Aus dem Stand der Technik ist es bekannt, Messwerte aus einem zeitabhängigen Verlauf zu bestimmen, in dem mit Hilfe einer Messeinrichtung ein Zeitpunkt ausgegeben wird, an dem eine bestimmte Messung stattgefunden hat. Der eigentliche Messwert kann anschließend aus dem zeitabhängigen Verlauf durch Verfahren wie Interpolationsverfahren ermittelt werden.

Wie bei jeder analogen oder digitalen Signalverarbeitung treten jedoch auch bei einer derartigen Messeinrichtung wie beispielsweise einer Messtasterfunktion Totzeiten auf. Diese Totzeiten führen im Allgemeinen zu Messfehlern und verschlechtern damit die Genauigkeit des Messergebnisses. Bei der Bestimmung beispielsweise von Positionswerten durch eine steuerungsintegrierte Messtasterfunktion wirken sich dabei sowohl eine Totzeit des Messtastersignals als auch eine Totzeit der Abtastwerte aus.

Aus der JP 7253811 A ist ein Messsteuerungsschaltkreis bekannt. Dieser Schaltkreis setzt dabei eine Totzeit für ein Kontrollsignal innerhalb vorgegebener Zeiten fest.

Die Gründe für die Entstehung einer Totzeit eines Messtastersignals können verschiedenartig sein. So ist es möglich, dass Verzögerungen bei dem Erfassen eines Triggerereignisses entstehen und auch bei der Übertragung des Messtastersignals durch verschiedene Komponenten. Die erst genannte Verzögerung entsteht in dem Sensor selbst durch die meist digitale Verarbeitung der Messgröße und durch die Ausgangstreiber, die das Signal verstärken. Innerhalb der Steuerung werden Totzeiten durch eine strombegrenzende Eingangsschaltung und die Opto-Koppler verursacht.

Weiterhin ergeben sich Totzeiten durch die getaktete Verarbeitung des Eingangssignals und die digitale Filterung. Anhand von Datenblättern des jeweils eingesetzten Sensors und der Steuerungshardware ist es möglich, die zu erwartenden Totzeiten näherungsweise zu ermitteln. Der exakte Wert für diese Totzeiten lässt sich jedoch nur durch geeignete Messreihen bestimmen. Die erwähnten Totzeiten der genannten Komponenten bewirken, dass die zu erfassenden Ereignisse zu spät erkannt werden und daher auch bei einer Interpolation des Positionswertes oder des zu ermittelnden Wertes ein falscher Zeitstempel zugrunde gelegt wird, was wiederum zu einem fehlerhaften Ergebnis führt. Durch die erwähnten Totzeiten kann es damit zu Positionsfehlern, insbesondere bei der Ermittlung von positiven oder negativen Flanken eines Verlaufs kommen.

Der vorliegenden Erfindung liegt daher die Aufgabe zugrunde, ein Verfahren und eine Vorrichtung zur Verfügung zu stellen, welche eine genauere Ermittlung von Messwerten insbesondere unter Berücksichtigung von Totzeiten ermöglichen. Dies wird erfindungsgemäß durch ein Verfahren nach Anspruch 1 und eine Vorrichtung nach Anspruch 9 erreicht. Vorteilhafte Ausführungsformen und Weiterbildungen sind Gegenstand der Unteransprüche.

Bei einem erfindungsgemäßen Verfahren zum Ermitteln von Messwerten aus einem zeitabhängigen Verlauf vorgegebener Werte wird zunächst eine Messung mit Hilfe einer Messeinrichtung durchgeführt und ein dieser Messung zugeordneter Zeitpunkt ermittelt. Weiterhin wird ein Messwert ermittelt, wobei zu der Ermittlung des Messwerts wenigstens zwei Wertepaare des zeitabhängigen Verlaufs verwendet werden und diese Wertepaare sich jeweils aus einem Zeitpunkt und einem diesem Zeitpunkt zugeordneten Wert zusammensetzen. Erfindungsgemäß wird der Messwert unter Zugrundelegung eines korrigierten Zeitpunktes bestimmt und der korrigierte Zeitpunkt wird ermittelt, in dem der der Messung zugeordnete Zeitpunkt durch einen Korrekturterm korrigiert wird, wobei der Korrekturterm eine Totzeit der Messeinrichtung berücksichtigt.

Damit werden bei dem erfindungsgemäßen Verfahren nicht direkt die Messwerte bestimmt, sondern diese werden indirekt anhand der Zeiten ermittelt, zu denen eine Messung stattgefunden hat. Anschließend werden, bevorzugt durch Interpolation, die entsprechenden Messwerte ermittelt. Da die erwähnten Zeitpunkte, wie oben erwähnt, mit Totzeiten behaftet sind; wird diese Totzeit bei der Ausgabe des erwähnten korrigierten Zeitpunktes berücksichtigt. Dieser korrigierte Zeitpunkt wird wiederum verwendet, um den Messwert zu bestimmen.

Damit wird durch die Erfindung eine Möglichkeit geschaffen, die Verzögerung, die durch die digitale Verarbeitung der Messgröße und durch die Ausgangstreiber verursacht wird, zu korrigieren. Weiterhin kann auch die Verzögerung der Steuerung, die durch die strombegrenzende Eingangsschaltung und die Optokoppler verursacht ist, zu korrigieren. Auf diese Weise ist eine genaue Ermittlung der von dem Messtaster ermittelten Positionswerte auch unabhängig von der Geschwindigkeit des Gebers und anderen physikalischen Größen, die sich während des Messvorgangs verändern können, möglich.

Bei einem vorteilhaften Verfahren enthält der Korrekturterm einen zeitlichen Abstand zwischen den beiden Zeitpunkten der Wertepaare. Bei den Wertepaaren handelt es sich insbesondere um Stützpunkte, die zur Ermittlung eines zeitabhängigen Verlaufs verwendet werden. Der zeitliche Abstand zwischen diesen Stützpunkten ist dabei bevorzugt eine Zykluszeit wie beispielsweise eine SERCOS-Zykluszeit.

Vorzugsweise wird daher zu der Ermittlung der Messwerte eine Vielzahl von Wertepaaren verwendet und diese Wertepaare weisen jeweils einen konstanten zeitlichen Abstand zueinander auf.

Bei einem weiteren bevorzugten Verfahren ist der Korrekturterm ein additiver Korrekturterm. Dies bedeutet, dass bevorzugt der ermittelte Zeitpunkt durch Addition bzw. Subtraktion von bestimmten zeitlichen Größen korrigiert wird.

Bei einem weiteren bevorzugten Verfahren sind die Messwerte einer Gruppe von Messwerten entnommen, welche Positionsmesswerte, Drehmomentmesswerte, Kraftmesswerte, Momentenmesswerte, Winkelmesswerte und dergleichen enthält. Daher ist es mit dem erfindungsgemäßen Verfahren beispielsweise unter Bezugnahme auf Positionsmesswerte möglich, jeweils exakte Positionen beispielsweise eines Arbeitselementes unter Berücksichtigung von Totzeiten des Systems zu bestimmen.

Bei einem weiteren vorteilhaften Verfahren wird der Messwert mit Hilfe eines Interpolationsverfahrens ermittelt. So kann es sich beispielsweise bei dem zeitabhängigen Verlauf um einen linearen Verlauf handeln, so dass der Messwert durch Mittelwertbildung zwischen den beiden Wertepaaren gebildet wird. Bei dem Verlauf kann es sich jedoch auch um nicht lineare Zusammenhänge handeln, so dass auch hier der Verlauf durch entsprechend geeignete Interpolation zwischen den beiden Punkten (unter Berücksichtigung des funktionalen Zusammenhangs des Verlaufs) ermittelt wird.

Bei einem weiteren bevorzugten Verfahren wird der korrigierte Zeitpunkt analysiert und in Abhängigkeit von dieser Analyse wird ein ganzzahliges Vielfaches des zeitlichen Abstandes zu dem korrigierten Zeitpunkt addiert oder von diesem Zeitpunkt subtrahiert. Genauer gesagt, wird bevorzugt eine Fallunterscheidung vorgenommen, die danach unterscheidet, ob der korrigierte Zeitpunkt kleiner ist als 0 oder größer als der zeitliche Abstand zwischen den genannten Zeitpunkten. Dies wird unter Bezugnahme auf die Figuren genauer erläutert.

Die vorliegende Erfindung ist weiterhin auf eine Vorrichtung zum Ermitteln von Messwerten aus einem zeitabhängigen Verlauf vorgegebener Werte gerichtet, wobei diese Vorrichtung eine Messeinrichtung aufweist, welche einen einer durchgeführten Messung zugeordneten Zeitpunkt ermittelt, und weiterhin eine Prozessoreinrichtung aufweist, welche einen Messwert ermittelt, wobei die Prozessoreinrichtung derart gestaltet ist, dass sie zu der Ermittlung des Messwerts wenigstens zwei Wertepaare des zeitabhängigen Verlaufs verwendet und diese Wertepaare sich jeweils aus einem Zeitpunkt und einem diesem Zeitpunkt zugeordneten Wert zusammensetzen. Erfindungsgemäß ist die Prozessoreinrichtung derart gestaltet, dass sie den Messwert unter Zugrundelegung eines korrigierten Zeitpunkts bestimmt und den korrigierten Zeitpunkt ermittelt, in dem sie dem der Messung zugeordneten Zeitpunkt durch einen Korrekturterm korrigiert, wobei der Korrekturterm eine Totzeit der Messeinrichtung berücksichtigt.

Weitere Vorteile und Ausführungsformen ergeben sich aus den beigefügten Zeichnungen: Darin zeigen:

Fig. 1  einen Verlauf zur Veranschaulichung der der Erfindung zugrunden liegenden Aufgabe; und

Fig. 2  einen Verlauf zur Veranschaulichung der Erfindung.

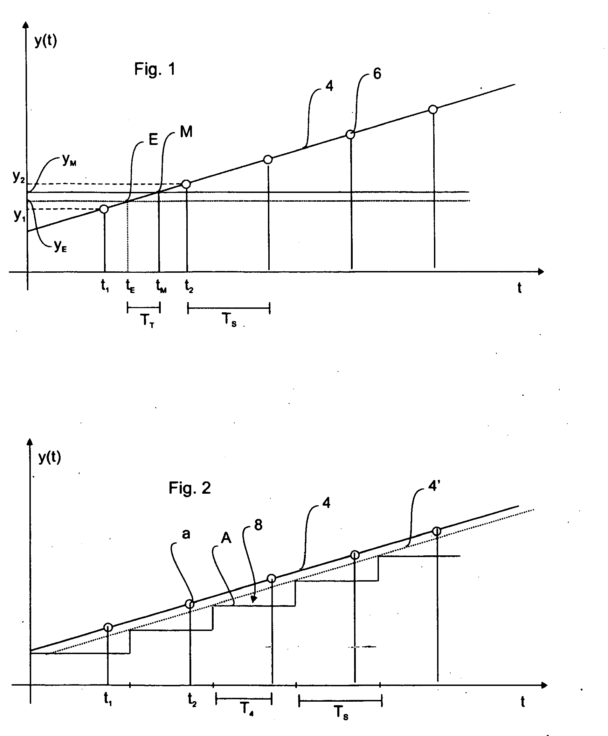

Figur 1 zeigt eine Darstellung eines funktionalen Zusammenhangs zwischen Werten y(t) und der Zeit t zur Veranschaulichung das der Erfindung zugrunde liegenden Problems. Auf einer Ordinate ist hierbei die Zeit t aufgetragen und auf der Koordinate hiervon abhängige Werte y(t). Hier handelt es sich bei diesen Werten y (t) um Positionswerte. Damit stellt hier Figur 1 eine Lage-Istwert-Kurve 4 einer konstanten Achsbewegung dar. Wie oben erwähnt, könnte es sich bei den Werten jedoch auch um Momentenwerte, Geschwindigkeitswerte, Winkelwerte, Kraftwerte oder dergleichen handeln.

Das Bezugszeichen 6 bezieht sich auf Stützpunkte, die entlang des Verlaufs 4 angeordnet sind und mittels derer die tatsächlichen Positionswerte y (t) ermittelt werden. Das Bezugszeichen M bezieht sich auf einen Messpunkt entlang des Verlaufs 4. Dabei wird durch eine Messeinrichtung ein Zeitpunkt $t_M$ erfasst. Aufgrund einer Totzeit $T_T$ der Messeinrichtung liegt jedoch der tatsächliche Zeitpunkt $t_E$ des Ereignisses E um die Totzeit $T_T$ hierzu versetzt. Entsprechend wird auch nicht ein korrekter Positionswert $y_E$ ausgegeben, sondern der hierzu entsprechende Positionswert $y_M$ ($t_M$).

Damit sind die in der Steuerung vorliegenden Positionswerte ebenfalls totzeitbehaftet. Die Werte $t_1$ und $t_2$ und auch die diesen zugeordneten Positionswerte $y_1$ und $y_2$ stellen Wertepaare dar, die bei der Interpolation verwendet werden, um die Messwerte y(t) zu bestimmen.

Bereits beim Messen der jeweiligen Lage-Istwerte durch einen Geber des Antriebs entsteht eine geringfügige Verzögerung. Eine wesentlich größere Totzeit wird dadurch verursacht, dass von der Abtastung des Gebersignals bis zur Übertragung der gemessenen Werte zur Steuerung eine gewisse Zeit vergeht. Dabei ist der jeweilige Abtastzeitpunkt durch die Zeitsteuerung bzw. das Timing des Interfaces, insbesondere eines SERCOS-Interfaces vorgegeben.

Figur 2 zeigt die Auswirkung der ermittelten Totzeit auf die Positionswerte. Dabei bezieht sich das Bezugszeichen 4 wiederum auf einen realen Positionsverlauf und das Bezugszeichen 4- auf einen von der Steuerung angenommenen Positionsverlauf. Das Bezugszeichen $T_s$ bezieht sich auf die SERCOS - Zykluszeit.

Das Bezugszeichen $T_4$ beschreibt die so genannte value acquisition time, die den relativen Zeitpunkt der Abtastung angibt, wobei diese jeweils auf den Beginn eines SERCOS - Zyklus bezogen ist. Die jeweiligen Abtastwerte (Zeitwerte) werden mit den Antriebstelegramm übertragen und gelten ab Beginn des jeweiligen SERCOS - Zyklus.

Durch die oben erwähnte Totzeit verschieben sich daher die einzelnen Punkte 6 um die jeweilige Totzeit nach rechts, so dass sich der in der Steuerung angenommene Positionsverlauf 4' ergibt, der gegenüber dem realen Positionsverlauf 4 abweicht. Das Bezugzeichen 8 bezieht sich dabei auf die jeweils in der Steuerung vorliegenden (totzeitbehafteten) Positionswerte.

Wird beispielsweise im Falle der in Fig. 2 gezeigten Darstellung ein Messwert a gemessen, so wird dieser erst mit dem Zyklus A übertragen. Gleichzeitig gilt dieser Messwert jedoch ab Beginn des gezeigten Zyklus A. Damit ergibt sich insgesamt der Positionsverlauf 4'. Auch diese ungewollte Abweichung von dem realen Positionsverlauf soll durch die Erfindung kompensiert werden.

Damit ergibt sich insgesamt die in Figur 2 gezeigte verzögerte Übertragung des Lage-Istwertes. Eine weitere Totzeit entsteht, wenn der Antrieb, dessen Lage-Istwert erfasst werden soll, an einer entfernten Steuerung angeschlossen ist. Dann werden die Positionswerte in dem Steuerungsverbund übertragen, was dazu führt, dass die Positionswerte genau um einen Zyklus verspätet vorliegen.

Im Rahmen der Erfindung wird daher vorgeschlagen, diese Totzeiten wieder zu kompensieren, was dazu führt, dass der Verlauf 8 in Figur 2 um die Totzeit nach links verschoben wird. In diesem Falle ergibt sich durch die Kompensation der Totzeit wieder der reale Positionswertverlauf für den in der Steuerung angenommenen Positionswertverlauf.

Um die vorhandenen Totzeiten auszugleichen, wird in die steuerungsintegrierte Funktion der Sensoreinrichtung eine parametrierbare Totzeitkompensation integriert. Dies bedeutet, dass bereits die Messeinrichtung selbst einen korrigierten Zeitwert ausgibt. Diese Totzeitkompensation gleicht die verzögerte Übertragung der Istwerte von den Antrieben an die Steuerung aus. Genauer gesagt wird vorzugsweise zu dem ermittelten bzw. gelatchten Zählerstand $t_M$ die Differenz aus der SERCOS - Zykluszeit $T_S$ und den $T_4$ Zeitpunkt addiert.

Die Kompensation der Totzeit erfolgt, indem von dem ermittelten gelatchten Zählerstand $t_M$ der parametrierte Werte für die Totzeit $T_T$ abgezogen wird. Damit ergibt sich folgender Zusammenhang für die beiden erwähnten Kompensationsschritte:

$$t_M \sim = t_M + T_S - T_4 - T_T \, ,$$

wobei $t_M \sim$ den resultierenden Zählerstand bezeichnet, $T_S$ die SERCOS - Zykluszeit, $T_4$ den relativen Zeitpunkt der Positionswerterfassung und $T_T$ die parametrierte Totzeit. Dabei ist vorzugsweise die Totzeit durch den Benutzer vorgebbar. Der Term $T_S$- $t_4$- $T_T$ beschreibt damit den Korrekturterm K.

Vorzugsweise werden die Zeitkonstanten $T_S$ und $T_4$ bei der Initialisierung des jeweiligen Interfaces bzw. eines SERCOS -Interfaces festgelegt. Sobald das SERCOS - Interface betriebsbereit ist, liest die Messtasterfunktion diese Konstanten aus und speichert sie lokal ab. Damit sind alle der in der obigen Gleichung verwendeten Konstanten sowie der Zeitpunkt der Signalflanke in Millisekunden vorhanden, so dass die Rechnung relativ einfach ist.

Es ist auch möglich, einen negativen Wert für die Kompensation einzugeben. Dies kann hilfreich sein, wenn durch die Übertragung der Achsposition über den Steuerungsverbund eine Totzeit entsteht. Werte die betragsmäßig größer sind als die zweifache SERCOS - Zykluszeit werden bevorzugt zurückgewiesen. Diese Einschränkung ergibt sich aus der begrenzten Größe der Puffer für Messtasterereignisse und für die Positionswerte.

Bei der Ermittlung des resultierenden Flankenzeitpunkts sind zwei Sonderfälle möglich. Einerseits ist es möglich, dass der resultierende Flankenzeitpunkt $t_M$ ~ kleiner als 0 ist und in einem anderen Fall ist es möglich, dass der resultierende Flankenzeitpunkt $t_M$ ~ größer ist, als die SERCOS - Zykluszeit $T_S$. In dem ersten Fall wird der Index, der den Abtastwert zum Zeitpunkt der Signalflanke referenziert, verkleinert. Weiterhin wird der resultierende Abtastzeitpunkt durch eine oder mehrmalige Addition der SERCOS - Zykluszeit in dem Bereich zwischen 0 und $T_S$ verschoben. Unter Verwendung dieses angepassten Werts findet eine Interpolation des Positionswertes statt, welche somit den korrigierten Messwert liefert. Bei dieser Situation befindet sich der tatsächliche Zeitpunkt der Flanke in einem vorangegangenen SERCOS - Zyklus. Der interpolierte Positionswert liegt folglich einen oder zwei Zyklen später vor als bei einer totzeitfreien Signalerfassung. Dieses Verfahren ist jedoch bei dem praktischen Einsatz einer Messtasterfunktion unproblematisch.

Wenn, wie oben beschrieben, der resultierende Flankenzeitpunkt größer ist als die SERCOS - Zykluszeit wird hier die Berechnung um einen Zyklus zurückgestellt. Dies bedeutet, dass der Index zu dem aktuellen Abtastwert in diesem Fall vergrößert wird und die Zykluszeit ein bis zwei mal von dem resultierenden Flankenzeitpunkt abgezogen wird. Unter Bezugnahme auf Figur 2 bedeutet dies, dass der gemessene Zeitpunkt bezüglich der durch die Abtastzeitpunkt abgebildeten Abschnitte nach rechts bzw. links verschoben wird.

Sämtliche in den Anmeldungsunterlagen offenbarten Merkmale werden als erfindungswesentlich beansprucht, sofern sie einzeln oder in Kombination gegenüber dem Stand der Technik neu sind.

**Bezugszeichenliste**

| 4 | Lage-Istwert-Kurve |
| 4' | angenommener Positionsverlauf |
| 6 | Stützpunkte |

8 Verlauf
K Korrekturterm
M Messpunkt
E Ereignis
t Zeit
$t_E$ tatsächlicher Zeitpunkt
$T_S$ Zykluszeit
$T_T$ Totzeit
$t_K$ korrigierter Zeitpunkt
$t_M$ gemessener Zeitpunkt
$t_1, t_2$ Werte
$T_4$ value acqisition time
$y(t)$ Positionswerte
$y_E$ korrekter Positionswert
$y_M$ entsprechender Positionswert
$y_1, y_2$ Positionswerte
a Messwert
A Zyklus

**Patentansprüche**

1. Verfahren zum Ermitteln von Messwerten aus einem zeitabhängigen Verlauf vorgegebener Werte, mit den Schritten:

   - Durchführung einer Messung mit Hilfe einer Messeinrichtung und Ermittlung eines dieser Messung zugeordneten Zeitpunkts ($t_M$);
   - Ermittlung des Messwerts ($y_E$), wobei zu der Ermittlung des Messwerts ($y_E$) wenigstens zwei Wertepaare ($t_1,y_1$; $t_2,y_2$) des zeitabhängigen Verlaufs verwendet werden und diese Wertepaare ($t_1,y_1$; $t_2.y_2$) sich jeweils aus einem Zeitpunkt ($t_1$; $t_2$) und einem diesem Zeitpunkt ($t_1$; $t_2$) zugeordneten Wert ($y_1$; $y_2$) zusammensetzen,

   **dadurch gekennzeichnet, dass**
   der Messwert ($y_E$) unter Zugrundelegung eines korrigierten Zeitpunkts bestimmt wird und der korrigierte Zeitpunkt ermittelt wird, in dem der der Messung zugeordnete Zeitpunkt ($t_M$) durch einen Korrekturterm korrigiert wird, wobei der Korrekturterm eine Totzeit ($T_T$) der Messeinrichtung berücksichtigt.

2. Verfahren nach Anspruch 1,
   **dadurch gekennzeichnet, dass**
   der Korrekturterm einen zeitlichen Abstand ($T_S$) zwischen den beiden Zeitpunkten ($t_1$; $t_2$) der Wertepaare ($t_1$, $y_1$; $t_2$, $y_2$) enthält.

3. Verfahren nach wenigstens einem der vorangegangenen Ansprüche
   **dadurch gekennzeichnet, dass**
   zu der Ermittlung der Messwerte ($y_E$) eine Vielzahl von Wertepaaren verwendet wird und diese Wertepaare jeweils einen konstanten zeitlichen Abstand ($T_S$) zueinander aufweisen.

4. Verfahren nach wenigstens einem der vorangegangenen Ansprüche
   **dadurch gekennzeichnet, dass**
   der Korrekturterm ein additiver Korrekturterm ist.

5. Verfahren nach wenigstens einem der vorangegangenen Ansprüche
   **dadurch gekennzeichnet, dass**
   die Totzeit ($T_T$) vorgebbar ist.

6. Verfahren nach wenigstens einem der vorangegangenen Ansprüche
   **dadurch gekennzeichnet, dass**
   der Korrekturterm einen relativen Zeitpunkt ($T_4$) einer Werterfassung berücksichtigt.

7. Verfahren nach wenigstens einem der vorangegangenen Ansprüche
   **dadurch gekennzeichnet, dass**
   der Korrekturterm die Totzeit ($T_T$) der Messeinrichtung als additiven Term berücksichtigt.

8. Verfahren nach wenigstens einem der vorangegangenen Ansprüche
   **dadurch gekennzeichnet, dass**
   die Messwerte einer Gruppe von Messwerten entnommen sind, welche Positionsmesswerte, Drehmomentmesswerte, Kraftmesswerte, Momentenmesswerte, Winkelmesswerte und dergleichen enthält.

9. Verfahren nach wenigstens einem der vorangegangenen Ansprüche
   **dadurch gekennzeichnet, dass**
   der Messwert ($y_E$) mit Hilfe eines Interpolationsverfahrens ermittelt wird.

10. Verfahren nach wenigstens einem der vorangegangenen Ansprüche
    **dadurch gekennzeichnet, dass**
    der korrigierte Zeitpunkt analysiert wird und in Abhängigkeit von dieser Analyse ein ganzzahliges Vielfaches des zeitlichen Abstands zu dem korrigierten Zeitpunkt addiert oder von diesem Zeitpunkt subtrahiert wird.

11. Vorrichtung zum Ermitteln von Messwerten aus einem zeitabhängigen Verlauf vorgegebener Werte, wobei diese Vorrichtung eine Messeinrichtung aufweist, welche einen einer durchgeführten Messung zugeordneten Zeitpunkt ($t_M$) ermittelt, mit einer Prozessoreinrichtung, welche einen Messwert ermittelt, wobei die Prozessoreinrichtung derart gestaltet ist, dass sie zu der Ermittlung des Messwerts ($y_E$) wenigstens zwei Wertepaare ($t_1$, $y_1$; $t_2,y_2$) des zeitabhängigen Verlaufs verwendet und diese Wertepaare ($t_1,y_1$; $t_2,y_2$) sich jeweils aus einem Zeitpunkt ($t_1$; $t_2$) und einem diesem Zeitpunkt ($t_1$; $t_2$) zugeordneten

Wert ($y_1$; $y_2$) zusammensetzen,
**dadurch gekennzeichnet, dass**
die Prozessoreinrichtung derart gestaltet ist, dass sie den Messwert unter Zugrundelegung eines korrigierten Zeitpunkts bestimmt und den korrigierten Zeitpunkt ermittelt, in dem sie den der Messung zugeordneten Zeitpunkt ($t_M$) durch einen Korrekturterm korrigiert, wobei der Korrekturterm eine Totzeit ($T_T$) der Messeinrichtung berücksichtigt.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 7253811 A